# EUROPÄISCHE PATENTSCHRIFT

(11) **EP 2 952 307 B1**
(45) Veröffentlichungstag und Bekanntmachung des Hinweises auf die Patenterteilung: **25.04.2018**
(21) Anmeldenummer: 15001075.9
(22) Anmeldetag: 15.04.2015
(51) Int. Cl.: B27D 5/00, B29C 63/00, B29C 65/00, B29C 65/16, B23K 26/244, B23K 26/323, B23K 26/324, B23K 26/06, B23K 26/08

(54) **VORRICHTUNG UND VERFAHREN ZUM AUFBRINGEN EINES KANTENBANDES AUF EINE SCHMALSEITE EINES WERKSTÜCKS**
DEVICE AND METHOD FOR APPLYING AN EDGE STRIP TO A NARROW EDGE OF A WORKPIECE
DISPOSITIF ET PROCÉDÉ DESTINÉ À APPLIQUER UNE BANDE DE CHANT SUR UN CÔTÉ ÉTROIT D'UNE PIÈCE USINÉE

(30) Priorität: 05.06.2014 DE 102014008455
(43) Veröffentlichungstag der Anmeldung: 09.12.2015
(73) Patentinhaber: IMA Klessmann GmbH Holzbearbeitungssysteme, 32312 Lübbecke (DE)
(72) Erfinder: Hampel, Thomas, DE - 32312 Lübbecke (DE); Seifert, Uwe, DE - 32361 Preußisch Oldendorf (DE); Hüsener, Stefan, DE - 32479 Hille (DE)
(74) Vertreter: Schober, Mirko

(56) Entgegenhaltungen:
- EP-A1- 2 345 518
- EP-A1- 2 422 947
- WO-A1-02/07905
- WO-A1-2013/117984
- WO-A1-2015/067692
- DE-A1-102009 050 858
- DE-A1-102009 050 859
- DE-B3-102012 102 785
- US-B1- 6 451 152
- U Weichmann ET AL: "VCSEL Day-2013: High Power VCSEL Systems", , 3 June 2013 (2013-06-03), page 14, XP055344083, Retrieved from the Internet: URL:http://lpn.epfl.ch/files/content/sites /lpn/files/conferences/VCSEL_Day_2013/Abst racts.pdf [retrieved on 2017-02-09]
- VAN LEEUWEN ROBERT ET AL: "High-power vertical-cavity surface-emitting lasers for diode pumped solid-state lasers", LASER TECHNOLOGY FOR DEFENSE AND SECURITY VIII, SPIE, 1000 20TH ST. BELLINGHAM WA 98225-6705 USA, vol. 8381, no. 1, 11 May 2012 (2012-05-11) , pages 1-7, XP060003104, DOI: 10.1117/12.920601 [retrieved on 2012-05-07]

## Beschreibung

Die Erfindung betrifft eine Vorrichtung gemäß dem Oberbegriff des Anspruchs 1 und ein Verfahren gemäß Anspruch 10 zum Aufbringen eines Kantenbandes auf die Schmalseite eines Werkstücks. Eine Vorrichtung gemäß dem Oberbegriff des Anspruchs 1 ist aus der EP 2 345 518 A1 bekannt. Bei den Kantenbändern der in Rede stehenden Art handelt es sich um Kaschierungsmaterialien, welche auf die Schmalseiten von vorzugsweise plattenförmigen Werkstücken aufgebracht werden, um deren Oberflächen ein gewünschtes optisches Erscheinungsbild zu verleihen und/oder diese vor mechanischen oder sonstigen Einflüssen zu schützen. Bei den vorzugsweise plattenförmigen Werkstücken kann es sich beispielsweise um Werkstücke aus Holz oder Holzersatzwerkstoffen wie HDF, MDF, Spanplatten, Laminaten oder dergl. handeln, vorzugsweise handelt es sich bei den Werkstücken um Möbelplatten, also plattenförmige Halbzeuge für die Möbelherstellung.
Das Aufbringen der Kantenbänder auf die Schmalseiten dieser Werkstücke wird regelmäßig dadurch bewerkstelligt, dass eine Schicht, insbesondere eine Schicht des Kantenbandes, aktiviert wird, um eine Verbindung des Kantenbandes mit der Schmalseite zu ermöglichen. Es handelt sich bei dieser Haftschicht oder haftvermittelnden Schicht insbesondere um eine wärmeaktivierbare Schicht, beispielsweise um eine Kunststoffschicht, die durch den Strahlungseintrag an- oder aufgeschmolzen wird, um so eine Haftschicht oder haftvermittelnde Schicht zu bilden.
Für die Aktivierung derartiger Schichten haben sich in der Vergangenheit Laser bewährt, insbesondere aufgrund ihrer Eigenschaft, um einen hinsichtlich Wirkungsort und Leistung präzise steuerbaren Energieeintrag in die Schicht zu ermöglichen. Nachteilig ist jedoch, dass bei konventionellen Lasersystemen, wie sie beispielsweise in der DE 10 2009 050 859 A1 beschrieben sind, Strahlführungsmaßnahmen, wie beispielsweise die beschriebene Prismenoptik, notwendig sind, um den Laserstrahl auf das Kantenband zu richten. Dies liegt daran, dass es in der Praxis häufig notwendig ist, die Schicht erst unmittelbar vor dem Inkontaktbringen des Kantenbands mit der Schmalseite zu aktivieren, d.h. die Strahlung in einem Zuführbereich, in dem das Kantenband bereits nahe der Schmalseite und in einem zur Schmalseite recht flachen Winkel verläuft, in die Schicht einzubringen. Mit den konventionellen im Stand der Technik beschriebenen Laseraggregaten, die bei derartigen Verfahren und Vorrichtungen zur Anwendung kommen, wurde bisher der Laserstrahl ortsfern vom Zuführbereich erzeugt und durch im Zuführbereich oder im Bereich des Zuführbereichs angeordnete Optiken auf die Schicht gelenkt. Dies bringt den Nachteil mit sich, dass durch die Verluste, die durch die optischen Komponenten zwangsweise auftreten, insgesamt nur ein recht geringer Wirkungsgrad bezogen auf den tatsächlich für die Aktivierung zur Verfügung stehenden Teil der erzeugten Laserleistung im Verhältnis zur aufgewendeten Leistung zur Verfügung steht.

Der Erfindung liegt daher die Aufgabe zugrunde, eine Vorrichtung und ein Verfahren zum Aufbringen eines Kantenbandes auf eine Schmalseite eines Werkstücks zur Verfügung zu stellen, welches hinsichtlich der für die Aktivierung der Schicht notwendigen Energie einen besseren Wirkungsgrad aufweist.

Die Aufgabe wird gelöst durch eine Vorrichtung und ein Verfahren mit den Merkmalen der unabhängigen Ansprüche. Die Merkmale der abhängigen Ansprüche betreffen vorteilhafte Ausführungsformen.
Das erfindungsgemäße Verfahren sieht vor, dass die Laserstrahlung in einem Zuführbereich zwischen dem Kantenband und der Schmalseite erzeugt wird. Es hat sich gezeigt, dass es möglich ist, eine Strahlungsquelle derart zu gestalten, dass diese in dem räumlich beengten Zuführbereich angeordnet werden kann und dabei noch genug Leistung erzeugt, um ein Aufbringen einer Kante auf ein Werkstück und ein Aktivieren einer Haftschicht oder haftvermittelnden Schicht zu ermöglichen. Dabei muss lediglich ein kurzer Weg von der Strahlung überbrückt werden, und es sind auch idealerweise keine Strahlumlenkungseinrichtungen, wie Prismen, Spiegel oder ähnliches notwendig.

Bei den Strahlungselementen handelt es sich um Halbleiterelemente. Bei diesen Laserstrahlung emittierenden Einheiten handelt es sich vorzugsweise um Oberflächenemitter, wie beispielsweise sogenannte VCSEL-Einheiten (Vertical Cavity Surface Emitting Laser). Die einzelnen Laserstrahlung emittierenden Einheiten weisen dabei vorzugsweise Abmessungen von nur wenigen Mikrometern aus. Die einzelnen Einheiten können zwar nur eine sehr geringe Laserleistung abgeben, durch die Vielzahl der Einheiten, die auf einem Strahlungselement bzw. auf einem Strahlungsmodul angeordnet werden können, lässt sich jedoch überraschenderweise insgesamt eine Leistung erzeugen, die aufgrund der direkten Einstrahlung über eine sehr kurze Strecke ausreicht, um die Schicht zu aktivieren.
Insbesondere um die Parallelität der emittierten Laserleistung sicherzustellen, können optische Elemente zwischen den Laserstrahlung emittierenden Einheiten und der zu aktivierenden Schicht angeordnet sein. Dabei handelt es sich vorzugsweise um Mikrolinsen, von denen vorzugsweise ebenfalls eine Mehrzahl Mikrolinsen für jedes Strahlungselement vorgesehen ist. Die Mikrolinsen lassen sich dann vorteilhafterweise nebeneinander anordnen, um so die Laserstrahlung emittierende Fläche des Strahlungselements zu bedecken.

Die einzelnen, Laserstrahlung emittierenden Einheiten erzeugen so eine Vielzahl einzelner Laserstrahlen, die vorzugsweise als flächiges Rastermuster auf die Schicht gerichtet sind. Die Laserstrahlen treffen auf verschiedenen Punkten auf und ermöglichen es so, die eingestrahlte Laserleistung gezielt auf die Fläche der Schicht zu verteilen.

Es ist besonders vorteilhaft, wenn einzelne Laserlicht emittierende Einheiten und/oder einzelne Strahlungselemente und/oder Gruppen von Einheiten und/oder Strahlungselementen einzeln ansteuerbar sind. Hierdurch können im Betrieb gezielt verschiedene Intensitätsverteilungen erzeugt werden.

Es ist zum Beispiel ermöglicht, eine besonders intensive Aktivierung der Schicht im Randbereich durchzuführen, beispielsweise eine Kunststoffschicht im Bereich der Ränder des Kantenbandes gezielt stärker aufzuschmelzen, um hier beispielsweise sicherzugehen, dass eine wasserdampfdichte Verbindung zu einer Oberflächenversiegelung der Flächenseiten des Werkstücks geschaffen wird.

Es kann jedoch auch möglich und wünschenswert sein, die Intensitätsverteilung in der Förderrichtung der bestrahlten Schicht gezielt zu steuern. Hierdurch wird aufgrund der Relativbewegung zwischen Schicht und Strahlungsquelle letztendlich ein zeitlicher Verlauf der auf eine einzelne Einheit der bestrahlten Fläche abgegebenen Laserleistung gezielt erzeugt. So kann beispielsweise im Fall aufzuschmelzender Kunststoffkanten der Aufheizvorgang optimal gesteuert werden, um beispielsweise gezielt ein gewisses Temperaturprofil in der Dickenrichtung der Schicht zu erzeugen oder eine bestimmte aufgeschmolzene Schichtdicke zu erreichen, ohne dass kritische Temperaturen an der direkt bestrahlten Oberfläche überschritten werden.

Vorzugsweise weist die Vorrichtung eine Schutzelelement, insbesondere eine Schutzscheibe auf. Die Ausgestaltung des Schutzelements als Schutzscheibe ist nur eine mögliche vorteilhafte Ausführungsform. Zur sprachlichen Vereinfachung wird im Folgenden jedoch der Begriff Schutzscheibe auch stellvertretend für andere Schutzelemente verwendet. Diese Schutzscheibe ist dafür eingerichtet, das Strahlungsmodul vor Beschädigungen und/oder Verschmutzungen zu schützen. Dabei schützt die Schutzscheibe insbesondere die Strahlungselemente und/oder optische Elemente, wie beispielsweise Linsen bzw. Mikrolinsen. Besonders vorteilhaft kann das Schutzelement bzw. die Schutzscheibe als halbdurchlässiger Spiegel ausgestaltet sein. Dieser ist bevorzugt so angeordnet, dass vom Kantenband ausgehende Strahlung durch den Spiegel reflektiert wird. Hierdurch wird es ermöglicht, zum Einen Elemente des Strahlungsmoduls, insbesondere die Strahlungselemente und/oder optische Elemente vor Beschädigungen durch reflektierte Strahlung zu schützen. Weiterhin wird eine Energieersparnis erzielt, indem vom Kantenband reflektierte Strahlung wieder zurück auf das Kantenband reflektiert wird.

Bei der Aktivierung der Haftschicht oder haftvermittelnden Schicht entstehen regelmäßig Emissionen, die sich - hauptsächlich in Form von Partikeln - auf Oberflächen niederschlagen können. Insbesondere wenn dies optische Elemente im Strahlengang der Laserstrahlung betrifft, wird hierdurch regelmäßig die Leistung und damit die Funktionsweise des Strahlungsmoduls beeinträchtigt. Auch sind die laseremittierenden Elemente bzw. deren Optiken empfindlich gegenüber Beschädigungen durch mechanische Beeinträchtigungen, wie sie in einem Produktionsumfeld durchaus zu erwarten sind. Der Vorteil einer Schutzscheibe liegt daher darin, dass mögliche Beschädigungen und/ oder Verschmutzungen die Schutzscheibe betreffen und nicht andere Elemente des Strahlungsmoduls. Im Gegensatz zu den meisten anderen Bauelementen eines erfindungsgemäßen Strahlungsmoduls lässt sich die Schutzscheibe in einfacher Weise und mit niedrigen Kosten austauschen und so in vorteilhafter Weise als Verschleißteil auslegen.

Dabei ist vorzugsweise eine Erkennungseinrichtung vorgesehen, die Verschmutzungen und/oder Beschädigungen der Schutzscheibe detektiert. Eine entsprechende Sensorik kann beispielsweise in Form einer speziellen Schicht auf die Schutzscheibe aufgebracht werden. Auf diese Weise können Verschmutzungen und Beschädigungen der Schutzscheibe detektiert werden und so ein rechtzeitiger Austausch der Schutzscheibe veranlasst werden, bevor es zu einer Beeinträchtigung des Produktionsablaufs aufgrund von Verschmutzungen oder Beschädigungen der Schutzscheibe kommt.

Vorteilhafterweise ist eine Absaugeinrichtung zur Absaugung von Luft vorgesehen. Das Absaugen der Luft, insbesondere aus dem Bereich zwischen dem Strahlungsmodul und dem Kantenband hat den Vorteil, dass mit der Absaugung auch Emissionen, insbesondere bei der Laserbeaufschlagung des Kantenbands freigesetzte Gase, abgesaugt werden. Verschmutzungen von Elementen des Strahlungsmoduls durch diese Gase, insbesondere optische Elemente und/oder eine Schutzscheibe, werden durch das Absaugen der Luft verhindert oder zumindest vermindert.

Es ist vorteilhaft, wenn die Vorrichtung eine Verstelleinrichtung für die Verstellung der Position des Strahlungsmoduls relativ zum Kantenband aufweist. Durch das Verstellen der Position des Strahlungsmoduls relativ zum Kantenband kann in vorteilhafter Weise auf unterschiedliche Produktionsbedingungen reagiert werden. Insbesondere kann so die Vorrichtung auf die Verarbeitung von Kantenbändern unterschiedlicher Breite eingestellt werden. Besonders vorteilhaft ist es, wenn die Verstellung der Position des Strahlungsmoduls in der Breitenrichtung des Kantenbands möglich ist. Bei breiteren oder schmaleren Kantenbändern kann das Strahlungsmodul so in vorteilhafter Weise im Hinblick auf die Breite des Kantenbands positioniert werden.

Besonders vorteilhaft ist eine Verstelleinrichtung, die ein Anfahren einer Wartungsposition für die Wartung eines Strahlungsmoduls ermöglicht. Unter einer Wartungsposition ist dabei eine Position zu verstehen, in der zu wartende Bestandteile des Strahlungsmoduls leicht zugänglich sind oder zumindest leichter zugänglich sind als in der Position, welche das Strahlungsmodul während der Produktion einnimmt. Insbesondere der Austausch einer Schutzscheibe kann so erleichtert werden.

Vorzugsweise weist die erfindungsgemäße Vorrichtung weiterhin Absorberelemente zur Absorption von Strahlung auf. Bei einer erfindungsgemäßen Vorrichtung kann es sein, dass Laserstrahlung, insbesondere am Kantenband vorbei, emittiert wird. Dies kann beispielsweise dann der Fall sein, wenn die Laserstrahlung bereits erzeugt wird, bevor das Kantenband den Wirkbereich der Laserstrahlung erreicht hat bzw. wenn Laserstrahlung noch erzeugt wird, nachdem das Ende eines Kantenbands den Wirkbereich der Laserstrahlung verlassen hat. Ebenfalls ist es möglich, dass Laserstrahlung den Kantenbereich der Ränder des Kantenbandes passiert. Um eine gute Anbindung der Kante zu erreichen, muss die Haftschicht oder die haftvermittelnde Schicht bis zum Rand des Kantenbands aktiviert werden. Es wird sich daher in der Praxis kaum vermeiden lassen, dass ein gewisser Anteil der Laserstrahlung in den Randbereichen des Kantenbands an diesem vorbei abgestrahlt wird.

Um zu verhindern, dass diese emittierende Laserstrahlung andere Bestandteile der Vorrichtung beschädigt, ist es vorteilhaft, Absorberelemente zum Auffangen dieser Laserstrahlung vorzusehen. Die Oberflächen, welche die Laserstrahlung absorbieren, sind dabei vorzugsweise wassergekühlt, d.h. sie sind aus einem Material mit hoher Wärmeleitfähigkeit, beispielsweise einem Metall, und stehen in direktem thermischen Kontakt mit wasserführenden Elementen, wie beispielsweise Kühlleitungen, so dass durch die Absorption des Laserlichts entstehende Wärme zunächst durch die Absorberelemente abgeleitet und dann eine Kühlflüssigkeit, bei der es sich insbesondere um Wasser handeln kann, abgegeben wird. Grundsätzlich sind noch weitere vorteilhafte Ausgestaltungen der Absorberelemente denkbar. So können die Absorberelemente luftgekühlt sein. Vorteilhaft in diesem Zusammenhang ist eine Luftkühlungseinrichtung, wie beispielsweise ein Ventilator und/oder eine die Luftkühlung begünstigende geometrische Ausgestaltung der Absorberelemente, beispielsweise durch angeformte Kühlfinger oder -rippen. Auch können die Absorber als aktive Kühlelemente - sogenannte Peltierelemente ausgebildet sein.

Das erfindungsgemäße Verfahren sieht vorzugsweise vor, dass die Temperatur des Kantenbandes gemessen wird. Dabei wird vorzugsweise die Temperatur der Haftschicht oder der haftvermittelnden Schicht gemessen. Durch diese Temperatur kann, insbesondere wenn die Messung nach der Aktivierung erfolgt, ein Rückschluss auf das Maß der Aktivierung gezogen werden. Vorzugsweise wird die Messung dabei zwischen einer Fügeposition, in der das Kantenband an die Schmalseite gedrückt wird, und dem Rastermuster der Laserstrahlung gemessen. Eine entsprechende Temperaturmesseinrichtung ist dementsprechend vorzugsweise am Strahlungsmodul, insbesondere in einem Bereich zwischen den Laserstrahlung emittierenden Strahlungselementen und der Fügeposition angeordnet.

Durch eine derartige, vorzugsweise berührungslose, Temperaturmessung ist es möglich, die Vorrichtung in Abhängigkeit von der gemessenen Temperatur zu steuern. Vorzugsweise betrifft dies die abgegebene Laserleistung. Besonders vorteilhaft ist es, wenn eine Regelung der Vorrichtung, insbesondere der Leistung der Laserstrahlen, vorgesehen ist. Eine Regelung ist insbesondere eine Steuerung, die einen Soll-Ist-Wert-Vergleich, insbesondere im Hinblick auf die Temperatur, durchführt und in Abhängigkeit des Ergebnisses dieses Soll-Ist-Wert-Vergleichs die Vorrichtung, insbesondere die Leistung der Laserstrahlen, ansteuert. Hierdurch kann eine gleichbleibende Qualität der Aktivierung der Haftschicht bzw. der haftvermittelnden Schicht sichergestellt werden, auch wenn die Laserstrahlungsleistung Schwankungen, beispielsweise aufgrund von Verschmutzungen optischer Elemente unterworfen ist. Eine solche vorteilhafte Temperaturmessung kann auch zum Detektieren von Fehlern des Kantenbandes genutzt werden. Weist ein zu verarbeitendes Kantenband herstellungsseitig Fehler, insbesondere Materialfehler auf, so können sich diese in einer Änderung des thermischen Verhaltens bei der Beaufschlagung des Kantenbandes mit Laserlicht bemerkbar machen, die vorzugsweise durch die Temperaturmessung erfasst wird.

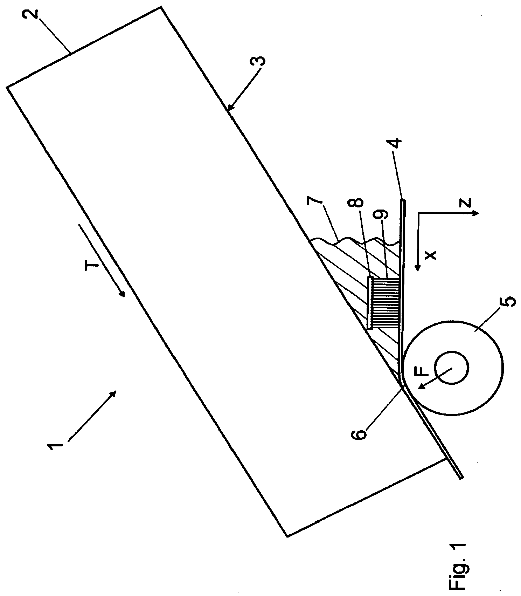

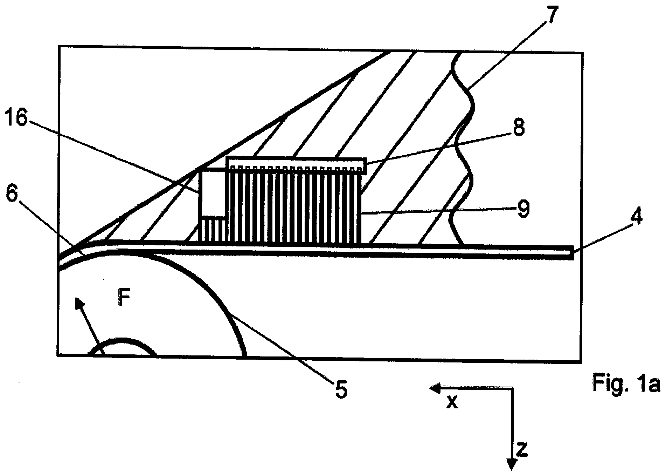

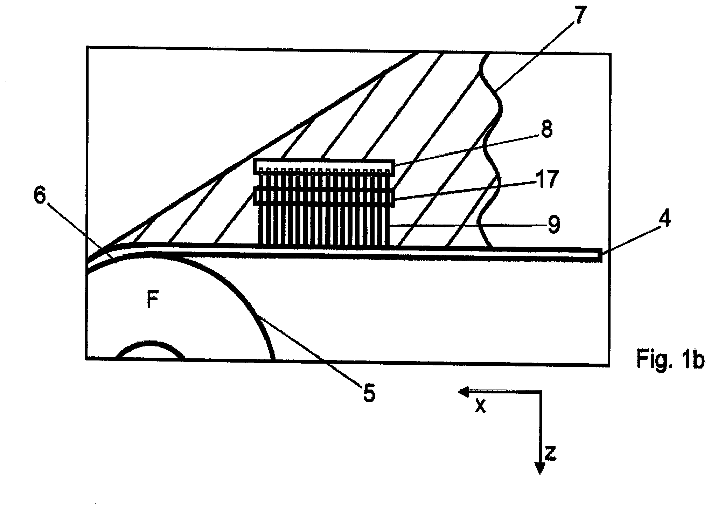

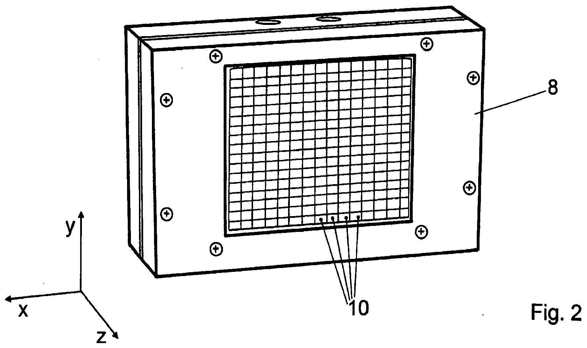

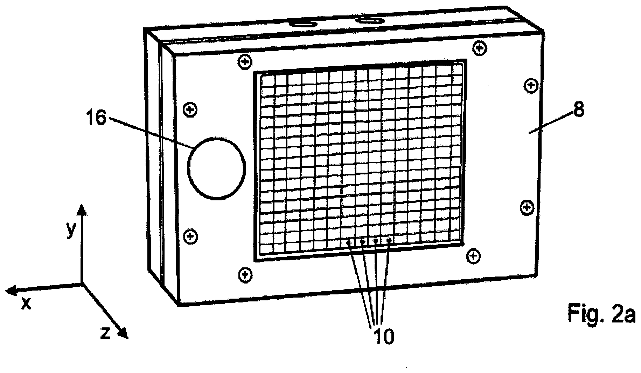

Die Erfindung wird im Folgenden anhand der Fig. 1 bis 5 schematisch näher erläutert.
Fig. 1 zeigt eine schematische Darstellung einer beispielhaften erfindungsgemäßen Vorrichtung.
Fig. 1a zeigt einen Ausschnitt aus Fig. 1, wobei die beispielhafte erfindungsgemäße Vorrichtung eine zusätzliche Temperaturmesseinrichtung aufweist.
Fig. 1b zeigt einen Ausschnitt aus Fig. 1, wobei die beispielhafte erfindungsgemäße Vorrichtung eine zusätzliche Schutzscheibe aufweist.
Fig. 2 zeigt eine schematische perspektivische Darstellung eines beispielhaften erfindungsgemäßen Strahlungsmoduls.
Fig. 2a zeigt eine schematische perspektivische Darstellung eines weiteren beispielhaften erfindungsgemäßen Strahlungsmoduls mit einer Temperaturmesseinrichtung.
Fig. 3 zeigt eine Schnittdarstellung eines beispielhaften erfindungsgemäßen Strahlungsmoduls.
Fig. 3a zeigt das Strahlungsmodul aus Fig. 3 mit einer zusätzlichen Schutzscheibe.
Fig. 3b zeigt das Strahlungsmodul aus Fig. 3 mit einer zusätzlichen Absaugeinrichtung.
Fig. 3c zeigt das Strahlungsmodul aus Fig. 3 mit zusätzlichen Absorberelementen.
Fig. 4 zeigt schematisch eine perspektivische Darstellung eines beispielhaften Strahlungselements.
Fig. 5 zeigt eine schematische Darstellung einer gezielten Erzeugung einer Intensitätsverteilung mit einer beispielhaften erfindungsgemäßen Strahlungsquelle.
Die erfindungsgemäße Vorrichtung 1 fördert mit einer nicht dargestellten Fördervorrichtung Werkstücke 2 in einer Transportrichtung T. Die beispielhafte Vorrichtung dient dazu, die Schmalseite 3 des gezeigten Werkstücks 2 mit einem Kantenband 4 zu versehen. Das Kantenband 4 wird dabei in einer Zuführrichtung X auf die Schmalseite 3 des Werkstücks 2 zu bewegt. Eine Andruckeinrichtung 5 drückt das Kantenband 4 mit einer Andruckkraft F an eine Fügeposition 6 an die Schmalseite 3. Ausgehend von dieser Fügeposition 6 erstreckt sich zwischen dem Kantenband 4 und der Schmalseite 3 der in Fig. 1 schraffiert dargestellte Zuführbereich 7. Im Zuführbereich 7 verläuft das Kantenband 4 bereits in einem spitzen Winkel zur Schmalseite 3, wodurch der Raum zwischen Kantenband 4 und Schmalseite 3 im Zuführbereich 7 eng begrenzt ist.
Im Zuführbereich 7 zwischen Kantenbereich 2 und Schmalseite 3 ist das beispielhafte Strahlungsmodul 8 angeordnet. Das Strahlungsmodul 8 gibt Laserstrahlung 9 in Strahlungsrichtung Z ab. Diese trifft auf das Kantenband 4, wo sie eine in Fig. 1 nicht separat dargestellte Schicht aktiviert. Das Strahlungsmodul 8 ist als flächiges Bauteil, dessen Haupterstreckungsrichtungen in einer zur Zuführrichtung X und der Breitenrichtung Y der mit Laserstrahlung bestrahlten Schicht zumindest im Wesentlichen parallelen Ebene liegen.
Das beispielhafte Strahlungsmodul 8 weist eine Vielzahl Strahlungselemente 10 auf. Die Strahlungselemente 10 sind mit ihrer Laserstrahlung 9 emittierenden Fläche ebenfalls zumindest im Wesentlichen parallel zu Zuführrichtung X und Breitenrichtung Y ausgerichtet.
Das beispielhafte Strahlungsmodul 8 kann vorteilhafterweise eine Temperaturmesseinrichtung 16 aufweisen. Diese ist in dem in Fig. 1a gezeigten Beispiel zwischen den Strahlungselementen 10 und der Fügeposition 6 angeordnet. Es handelt sich im gezeigten Beispiel vorteilhafterweise um eine berührungslose Messeinrichtung, insbesondere um ein Pyrometer und/oder eine Wärmebildkamera. Im gezeigten Beispiel misst die Temperaturmesseinrichtung 16 die Temperatur des Kantenbandes 4 in einem Bereich des Kantenbandes zwischen dem Rastermuster und der Fügeposition 6. Gemäß der in Fig. 1b gezeigten vorteilhaften Ausführungsform weist die Vorrichtung eine Schutzscheibe 17 auf, die - wie in Fig. 1b dargestellt ist - vorzugsweise zwischen den Strahlungselementen 10 des Strahlungsmoduls 8 und dem Kantenband 4 angeordnet ist.

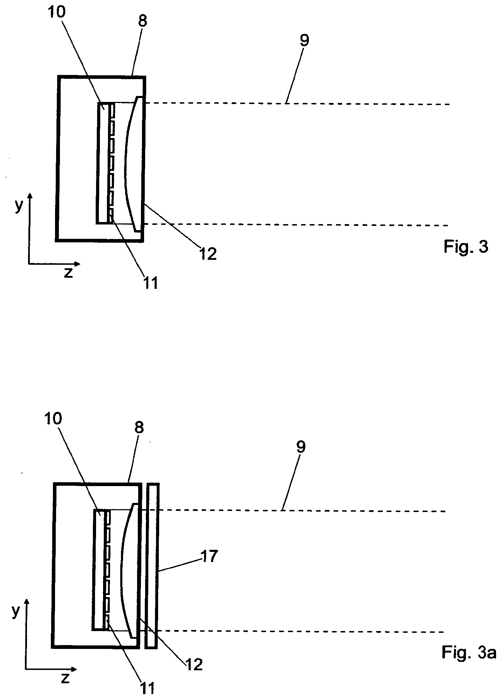

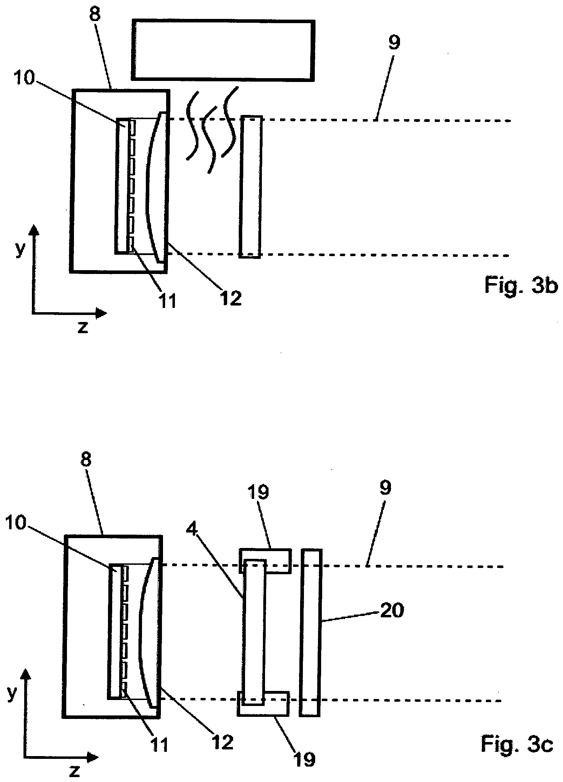

Die in Fig. 3 beispielhaft dargestellte Ausführungsform eines Strahlungsmoduls 8 weist ebenfalls Strahlungselemente 10 auf, von denen in der gewählten Schnittdarstellung nur eines sichtbar ist.
Die in Fig. 3a dargestellte vorteilhafte Ausführungsform weist zusätzlich eine Schutzscheibe 17 auf. Alternativ und/oder ergänzend können auch die in Fig. 3b dargestellte Absaugeinrichtung 18 oder die in Fig. 3c dargestellten Absorberelemte 19 und 20 vorgesehen sein. In dem in Fig. 3c gezeigten vorteilhaften Ausführungsbeispiel befinden sich zwei Absorberelemente 19 im Randbereich des Kantenbandes, wo sie beispielsweise Führungselemente zur Führung des Kantenbandes 4 vor Laserstrahlung 9 schützen. Es ist ebenfalls möglich, dass auch die Führungselemente selbst als Absorberelemente 19 ausgebildet sind. Dies kann beispielsweise dadurch erreicht werden, dass die Führungselemente eine hierfür zweckmäßige Geometrie, beispielsweise durch angeformte Kühlrippen, aufweisen. Ein derart gestaltetes Führungselement kann dann selbst als Absorberelement dienen, da es die durch seine Funk-tion als Absorberelement aufgenommene Wärmeenergiemenge schnell genug wieder abgeben kann, um nicht in seiner Funktion als Führungselement beeinträchtigt zu werden. Ein weiteres Absorberelement 20 befindet sich vorteilhafterweise auf der von dem Strahlungsmodul 8 abgewandten Seite des Kantenbandes 4 und dient insbesondere dazu, beim Einlaufen des Kantenbandes 4 in die Vorrichtung 1 bzw. beim Erreichen des Endes des Kantenbandes 4 zu verhindern, dass Laserstrahlung 9 am Kantenband 4 vorbei emittiert wird. Darüber hinaus absorbiert das Absorberelement 20 Laserstrahlung 9, die den oberen und/oder unteren Randbereich des Kantenbandes 4 passiert.

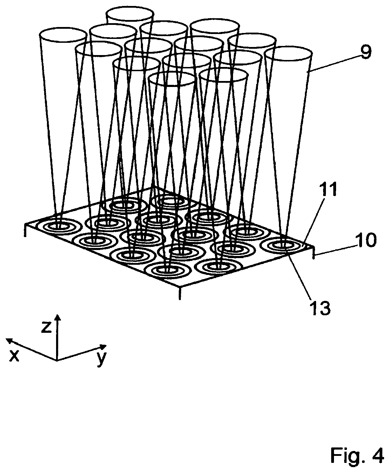

Um vorzugsweise eine möglichst parallele Laserstrahlung 9 zu erhalten, können wie im in Fig. 3 gezeigten Beispiel Mikrolinsen 11 oder auch konventionelle Optiken 12, wie beispielsweise Zylinderlinsen, im Strahlengang angeordnet sein. Dabei ist es beispielsweise möglich - wie dies in Fig. 4 schematisch dargestellt ist - einzelne Laserlicht emittierende Einheiten 13, die über die lichtemittierende Oberfläche des Strahlungselements 10 verteilt sind, jeweils mit einer Mikrolinse 11 zu versehen, um eine gezielte Fokussierung und/oder Auffächerung der von der jeweiligen Einheit 13 abgegebenen Laserstrahlung 9 zu erzeugen

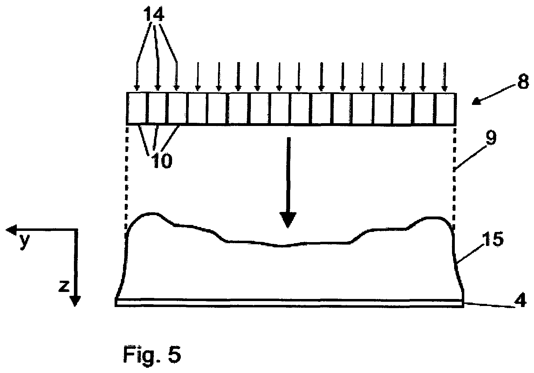

Werden einzelne Strahlungselemente 10 eines Strahlungsmoduls 8 oder einzelne Einheiten 13 eines Strahlungselements 10 einzeln gezielt angesteuert - was natürlich auch gruppenweise geschehen kann - so kann, wie es in Fig. 5 beispielhaft gezeigt ist, eine gezielte Verteilung der eingestrahlten Laserenergie über die bestrahlte Fläche herbeigeführt werden. In dem in Fig. 5 gezeigten Beispiel wird die eingestrahlte Laserenergie in der Breitenrichtung Y des Kantenbandes 4 variiert. Hierfür werden beispielhaft einzelne Strahlungselemente 10 eines beispielhaften Strahlungsmoduls 8 mit separaten Steuersignalen 14 angesteuert. Durch die unterschiedlichen Steuersignale 14 kann gezielt die beispielhafte Verteilung 15 der eingestrahlten Laserenergie über die Erstreckung des bestrahlten Bereichs in Richtung Y der Schicht bzw. des Kantenbandes 4 erzeugt werden.

## Patentansprüche

1. Vorrichtung (1) zum Aufbringen eines Kantenbandes (4) auf eine Schmalseite (3) eines Werkstücks, insbesondere aus Holz oder einem Holzersatzwerkstoff, mit einer Strahlenquelle zur Aktivierung einer Haftschicht oder haftvermittelnden Schicht, wobei die Strahlungsquelle ein Strahlungsmodul (8) mit einer Mehrzahl Laserstrahlung (9) emittierender Strahlungselemente (10) ist,
**dadurch gekennzeichnet,**
**dass** das Strahlungsmodul (8) flächig gestaltet ist, wobei die Strahlung wenigstens in etwa quer zu den Haupterstreckungsrichtungen des Strahlungsmoduls (8) abgegeben wird, und dass die Strahlungsquelle in einem Zuführbereich zwischen dem Kantenband und der Kante angeordnet ist, wobei die Strahlungselemente (10) Halbleiterelemente sind, die jeweils eine Mehrzahl Laserstrahlung emittierender Einheiten (13), insbesondere Oberflächenemitter, wie vorzugsweise VCSEL, aufweisen.

2. Vorrichtung nach Anspruch 1,
**dadurch gekennzeichnet,**
**dass** die Strahlungselemente (10) derart flächig angeordnet und/oder derart gestaltet sind, dass sie die Laserstrahlung in einer von den Flächenerstreckungsrichtungen (X, Y) ihrer Laserstrahlung emittierenden Oberfläche verschiedenen, vorzugsweise wenigstens ungefähr senkrechten Richtung (Z) emittieren.

3. Vorrichtung (1) nach einem der Ansprüche 1 bis 2,
**dadurch gekennzeichnet,**
**dass** die Strahlungsquelle so angeordnet ist, dass die Strahlung auf die zu aktivierende Schicht in einem Winkel von wenigstens 75° und höchstens 105°, bevorzugt wenigstens teilweise senkrecht, auftrifft.

4. Vorrichtung (1) nach einem der Ansprüche 1 bis 3,
**dadurch gekennzeichnet,**
**dass** einzelne Strahlungselemente (10) und/oder Einheiten (13) und/oder Gruppen von Strahlungselementen (10) und/oder Einheiten (13) einzeln ansteuerbar sind.

5. Vorrichtung (1) nach einem der vorigen Ansprüche,
**dadurch gekennzeichnet,**
**dass** die Vorrichtung (1), insbesondere das Strahlungsmodul (8), ein Schutzelement, vorzugsweise eine Schutzscheibe (17) aufweist, die dazu ausgebildet ist, das Strahlungsmodul (8), insbesondere die Strahlungselemente (10) und/oder ein optisches Element (11, 12) des Strahlungsmoduls (8) vor Beschädigungen und/oder Verschmutzungen, insbesondere aufgrund von Emissionen, die bei der Aktivierung der Haftschicht oder haftvermittelnden Schicht entstehen, zu schützen.

6. Vorrichtung (1) nach Anspruch 5,
**dadurch gekennzeichnet,**
**dass** die Vorrichtung (1), insbesondere das Strahlungsmodul (8), eine Erkennungseinrichtung zur Erkennung von Verschmutzungen und/oder Beschädigungen der Schutzscheibe (17) aufweist.

7. Vorrichtung (1) nach einem der vorigen Ansprüche,
**dadurch gekennzeichnet,**
**dass** die Vorrichtung (1) eine Absaugeinrichtung (18) zur Absaugung von Luft aus dem Bereich zwischen dem Strahlungsmodul (8), insbesondere den Strahlungselementen (10), und dem Kantenband (4) aufweist.

8. Vorrichtung (1) nach einem der vorigen Ansprüche,
**dadurch gekennzeichnet,**
**dass** die Vorrichtung (1) eine Verstelleinrichtung für die Verstellung der Position des Strahlungsmoduls (8) relativ zum Kantenband (4), insbesondere in der Breitenrichtung (Y) des Kantenbands (4) aufweist, insbesondere wobei die Verstelleinrichtung ein Anfahren einer Wartungsposition für die Wartung des Strahlungsmoduls (8) ermöglicht.

9. Vorrichtung (1) nach einem der vorigen Ansprüche,
**dadurch gekennzeichnet,**
**dass** die Vorrichtung (1) ein, vorzugsweise flüssigkeitsgekühltes Absorberelement (19, 20) aufweist, das vorzugsweise auf der von dem Strahlungsmodul (8) abgewandten Seite des Kantenbandes (4) angeordnet ist.

10. Verfahren zum Aufbringen eines Kantenbandes auf eine Schmalseite eines Werkstücks, insbesondere aus Holz oder einem Holzersatzwerkstoff, mittels einer Vorrichtung nach einem der vorigen Ansprüche, wobei die Haftschicht oder haftvermittelnde Schicht durch Laserstrahlung (9) aktiviert wird, wobei eine Mehrzahl einzelner Laserstrahlen (9) erzeugt und, vorzugsweise als flächiges Rastermuster, auf verschiedene Punkte der Schicht gerichtet wird,
**dadurch gekennzeichnet,**
**dass** die Laserstrahlung in einem Zuführbereich (7) zwischen dem Kantenband (4) und der Schmalseite (3) erzeugt wird.

11. Verfahren nach Anspruch 10,
**dadurch gekennzeichnet,**
**dass**, vorzugsweise zur gezielten Erzeugung einer vorgebbaren Flächenverteilung (15) der eingestrahlten Laserleistung auf der Schicht, die Leistung einzelner Laserstrahlen (9) und/oder einzelner Gruppen von Laserstrahlen (9) gesteuert wird.

12. Verfahren nach einem der Ansprüche 10 oder 11,
**dadurch gekennzeichnet,**
**dass** die Temperatur des Kantenbandes, insbesondere der Haftschicht oder der haftvermittelnden Schicht, insbesondere in einem Bereich des Kantenbandes zwischen dem Rastermuster und einer Fügeposition, in der das Kantenband an die Schmalseite gedrückt wird, gemessen wird.

13. Verfahren nach Anspruch 12,
**dadurch gekennzeichnet,**
**dass** die Vorrichtung (1), insbesondere die Leistung der Laserstrahlen (9), in Abhängigkeit von der gemessenen Temperatur gesteuert, insbesondere geregelt, wird.

## Claims

1. Device (1) for applying an edge strip (4) to a narrow edge (3) of a workpiece, more particularly of wood or wood substitute, with a radiation source for activating an adhesive layer or an adhesion- improving coating, wherein the radiation source is a radiation module (8) with a plurality of radiation elements (10) emitting laser radiation, **characterised in that** the radiation module (8) has a flat construction wherein the radiation is emitted at least approximately transversely to the main extension directions of the radiation module (8), and that the radiation source is disposed in a feed area between the edge strip and the edge, wherein the radiation elements (10) are semi-conductor elements which each have a plurality of units (13) emitting laser radiation, more particularly surface emitters, such as preferably VCSEL.

2. Device according to claim 1 **characterised in that** the radiation elements (10) are arranged and/or configured in a flat design in such a way that they emit the laser radiation in a direction (Z) which is different from, preferably at least approximately perpendicular to, the flat extension direction (X, Y) of their surface emitting the laser radiation.

3. Device (1) according to one of claims 1 to 2 **characterised in that** the radiation source is arranged so that the radiation strikes the layer to be activated at an angle of at least 75 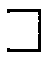 and at most 105 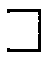 , preferably at least in part at right angles.

4. Device (1) according to one of claims 1 to 3 **characterised in that** individual radiation elements (10) and/or units (13) and/or groups of radiation elements (10) and/or units (13) can be controlled individually.

5. Device (1) according to one of the preceding claims, **characterised in that** the device (1), more particularly the radiation module (8) has a protection element, preferably a protective disc (17), which is configured to protect the radiation module (8), more particularly the radiation elements (10) and/or an optical element (11, 12) of the radiation module (8) against damage and/or dirt, more particularly as a result of the emissions which arise during activation of the adhesive layer or adhesion-improving coating.

6. Device (1) according to claim 5 **characterised in that** the device (1), more particularly the radiation module (8) has a detection device for detecting dirt and/or damage to the protective disc (17).

7. Device (1) according to one of the preceding claims **characterised in that** the device (1) has a suction device (18) for extracting air from the region between the radiation module (8), more particularly the radiation elements (10), and the edge strip (4).

8. Device (1) according to one of the preceding claims **characterised in that** the device (1) has an adjusting device for adjusting the position of the radiation module (8) relative to the edge strip (4), more particularly in the width direction (Y) of the edge strip (4), more particularly whereby the adjusting device makes it possible to reach a monitoring position for monitoring the radiation module (8).

9. Device (1) according to one of the preceding claims **characterised in that** the device (1) has a preferably liquid-cooled absorber element (19, 20) which is preferably disposed on the edge of the edge strip (4) facing away from the radiation module (8).

10. Method for applying an edge strip to a narrow edge of a workpiece, more particularly of wood or wood substitute, by means of a device according to one of the preceding claims, wherein the adhesive layer or the adhesion-improving coating is activated by laser radiation (9), wherein a plurality of individual laser beams (9) are generated and directed, preferably as a flat screen pattern, to different points of the layer, **characterised in that** the laser radiation is generated in a feed region (7) between the edge strip (4) and the narrow edge (3).

11. Method according to claim 10, **characterised in that** the power of individual laser beams (9) and/or individual groups of laser beams (9) is controlled, preferably for the targeted creation of a predeterminable flat surface distribution (15) of the laser power radiated onto the layer.

12. Method according to one of claims 10 or 11 **characterised in that** the temperature of the edge strip, more particularly of the adhesive layer or the adhesion-improving coating, is measured, more particularly in a region of the edge strip between the screen pattern and a joining position in which the edge strip is pressed against the narrow edge.

13. Method according to claim 12 **characterised in that** the device (1), more particularly the power of the laser beams (9), is controlled, more particularly regulated, in dependence on the measured temperature.

## Revendications

1. Dispositif (1) pour l'application d'une bande de chant (4) sur un côté étroit (3) d'une pièce à usiner, en particulier en bois ou en matériau de remplacement du bois, avec une source de rayonnement pour l'activation d'une couche adhésive ou d'une couche favorisant l'adhésion, sachant que la source de rayonnement est un module de rayonnement (8) avec une pluralité d'éléments de rayonnement (10) émettant des rayons laser (9),
**caractérisé en ce que**,
le module de rayonnement (8) est de conception plane, sachant que le rayonnement est émis au moins à peu près transversalement par rapport aux principales directions du module de rayonnement (8), et que la source de rayonnement est disposée dans un domaine d'admission entre la bande de chant et le chant, sachant que les éléments de rayonnement (10) sont des éléments semi-conducteurs, qui présentent chacun une pluralité d'unités (13) émettant des rayons laser, en particulier des émetteurs à effet de surface, comme, de préférence, VCSEL,

2. Dispositif (1) selon la revendication 1,
**caractérisé en ce que**
les éléments de rayonnement (10) sont disposés et / ou conçus en nappe de manière à ce qu'ils émettent le rayon laser dans une direction différente des directions d'extension (X, Y) de leur surface émettant le rayon laser, de préférence au moins à peu près dans une direction perpendiculaire (Z).

3. Dispositif (1) selon l'une des revendications 1 à 2,
**caractérisé en ce que**,
la source de rayonnement est disposée de manière à ce que le rayonnement tombe sur la couche à activer en formant un angle de 75° au moins et de 105° au plus, de préférence, au moins partiellement perpendiculairement.

4. Dispositif (1) selon l'une des revendications 1 à 3,
**caractérisé en ce que**
les éléments de rayonnement individuels (10) et / ou les unités (13) et / ou les groupes d'éléments de rayonnement (10) et / ou d'unités (13) peuvent être commandés individuellement.

5. Dispositif (1) selon l'une des revendications précédentes,
**caractérisé en ce que**
le dispositif (1), en particulier le module de rayonnement (8), présente un élément de protection, de préférence une plaque de protection (17) qui est conçue pour protéger le module de rayonnement (8), en particulier l'élément de rayonnement (10) et / ou un élément optique (11, 12) du module de rayonnement (8) contre endommagements et / ou souillures, résultant en particulier d'émissions, qui se produisent lors de l'activation de la couche adhésive ou de la couche favorisant l'adhésion.

6. Dispositif (1) selon la revendication 5,
**caractérisé en ce que**
le dispositif (1), en particulier le module de rayonnement (8), présente une Installation de reconnaissance pour la détection de souillures et / ou d'endommagements de la plaque de protection (17).

7. Dispositif (1) selon l'une des revendications précédentes,
**caractérisé en ce que**
le dispositif (1) présente un dispositif d'aspiration (18) pour aspirer l'air hors de la zone située entre le module de rayonnement (8), en particulier les éléments de rayonnement (10), et la bande de chant (4).

8. Dispositif (1) selon l'une des revendications précédentes,
**caractérisé en ce que**
le dispositif (1) présente un dispositif de réglage pour le réglage de la position du module de rayonnement (8) par rapport à la bande de chant (4), en particulier dans la direction de la largeur (Y) de la bande de chant (4), sachant, en particulier, que le dispositif de réglage permet l'amenée dans la position d'entretien pour l'entretien du module de rayonnement (8).

9. Dispositif (1) selon l'une des revendications précédentes,
**caractérisé en ce que**
le dispositif (1) présente un élément d'absorption (19, 20), qui, refroidi de préférence avec un liquide, est disposé, de préférence, sur le côté de la bande de chant (4) opposé au module de rayonnement (8).

10. Procédé d'application d'une bande de chant sur un côté étroit d'une pièce à usiner, en particulier en bois ou en matériau de remplacement du bois, au moyen d'un dispositif selon l'une des revendications précédentes, sachant que la couche adhésive ou la couche favorisant l'adhésion est activée par un rayonnement laser (9), sachant qu'une pluralité de rayons laser (9) individuels est générée et sachant que le rayonnement est dirigé de préférence, en tant que trame plane, sur différents points de la couche,
**caractérisé en ce que**
le rayonnement laser est généré dans un domaine d'admission (7) entre la bande de chant (4) et le côté étroit (3).

11. Procédé selon la revendication 10,
**caractérisé en ce que**,
pour la réalisation ciblée d'une répartition en surface pré-déterminable (15) de la puissance laser émise sur la couche, la puissance des rayons laser (9) individuels et / ou des différents groupes de rayons laser (9) est commandée.

12. Procédé selon l'une des revendications 10 ou 11,
**caractérisé en ce que**
la température de la bande de chant, en particulier de la couche adhésive ou de la couche favorisant l'adhésion, est mesurée dans une zone de la bande de chant, entre la trame et une position d'assemblage, dans laquelle la bande de chant est pressée contre le côté étroit.

13. Procédé selon la revendication 12,
**caractérisé en ce que**
le dispositif (1), en particulier la puissance des rayons laser (9), est commandé, en particulier réglé, en fonction de la température mesurée.
